# FASCICULE DE BREVET EUROPEEN

(11) **EP 1 332 828 B1**
(45) Date de publication et mention de la délivrance du brevet: **03.11.2010**
(21) Numéro de dépôt: 03290054.0
(22) Date de dépôt: 10.01.2003
(51) Int. Cl.: B23K 20/02, B21D 26/02, B23K 20/26

(54) **Procédé de fabrication de pièces par soudage par diffusion et par formage superplastique, et moule pour mettre en oeuvre un tel procédé**
Verfahren zur Herstellung eines Gegenstandes durch superplastische Formung und Diffusionsschweissung und Form zur Durchführung des Verfahrens
Method for manufacturing workpieces by diffusion bonding and superplastic forming, and mold for implementing the method

(30) Priorité: 10.01.2002 FR 0200235
(43) Date de publication de la demande: 06.08.2003
(73) Titulaire: SNECMA, 75015 Paris (FR); Hurel-Hispano Le Havre, 76700 Gonfreville l'Orcher (FR)
(72) Inventeur: Franchet, Jean-Michel Patrick Maurice, 75018 Paris (FR); Klein, Gilles Charles Casimir, 95540 Mery sur Oise (FR); Lamy, Olivier Daniel, 76600 Le Havre (FR); Szkolnik, Edmond Paul, 76110 Bretteville du Grand Caux (FR)
(74) Mandataire: Nguyen, Dominique

(56) Documents cités:
- US-A- 3 927 817
- US-A- 5 683 608
- US-A- 5 797 239

## Description

### DOMAINE TECHNIQUE

Le domaine technique de la présente invention est celui des procédés de fabrication de pièces utilisant les méthodes de soudage par diffusion et de formage superplastique.

Le domaine technique de l'invention concerne également les moules permettant de mettre en oeuvre des procédés de fabrication de pièces, tels que ceux mentionnés ci-dessus.

### ETAT DE LA TECHNIQUE ANTERIEURE

Les procédés de fabrication de pièces creuses utilisant des méthodes de soudage par diffusion et de formage superplastique ont fait l'objet de diverses réalisations dans l'art antérieur.

En effet, on connaît par exemple dans le domaine de l'industrie aéronautique, des méthodes de fabrication de pièces creuses formées par des tôles métalliques, celles-ci pouvant être mises en oeuvre afin de réaliser des éléments du type pale de réacteur ou encore des éléments du type conduit pour fluide d'une turbomachine.

De manière générale, ces méthodes de fabrication comprennent plusieurs étapes distinctes effectuées successivement.

Parmi ces étapes, la première consiste à réaliser une opération de soudage par diffusion d'une pluralité de tôles métalliques. Ces tôles métalliques sont superposées les unes sur les autres, et amenées en contact d'une surface plane d'une structure adaptée pour les recevoir. L'ensemble formé par les tôles métalliques est alors soumis à une source de chaleur et à une injection de gaz sous pression, afin de réaliser la soudure par diffusion et d'obtenir un ensemble d'une seule pièce.

Une fois cette opération terminée, l'ensemble obtenu doit généralement subir une déformation afin d'adopter une forme générale relativement proche d'une forme finale d'une pièce à réaliser. Pour ce faire, l'ensemble est mis en contact d'une surface d'un moule, puis plaqué contre cette surface à l'aide de moyens d'injection de gaz sous pression ainsi qu'à l'aide d'une source de chaleur, ces deux éléments combinés permettant la déformation de l'ensemble. La surface sur laquelle est plaqué l'ensemble dispose d'une géométrie sensiblement identique à une géométrie de l'ensemble que l'on désire obtenir, après la réalisation de cette opération de déformation.

La troisième et dernière étape de ces procédés selon l'art antérieur consiste en un gonflage d'une ou plusieurs cavités internes de l'ensemble, en vue de réaliser une pièce présentant au moins une portion creuse. Cette opération s'effectue à l'aide de la technique connue de formage superplastique, en injectant du gaz sous pression entre les tôles métalliques de l'ensemble, tout en maintenant cet ensemble à température élevée, dans un moule dont une géométrie d'une paroi interne correspond à la géométrie externe finale de la pièce à réaliser.

En raison de la multiplicité des étapes à effectuer, le temps de cycle de réalisation de ces pièces est élevé, ce qui engendre des contraintes en matière de temps et de coûts. De plus, ce type de procédé nécessite un outillage spécifique important, puisque trois moules différents sont nécessaires pour réaliser les étapes du procédé.

Il est à noter que lorsque la pièce à réaliser n'a à priori pas besoin de subir la seconde étape de déformation, notamment lorsque cette pièce dispose d'une géométrie externe finale relativement plane, on peut alors réaliser successivement l'étape de soudage par diffusion et l'étape de formage superplastique lors d'une seule opération de chauffage.

Cependant, cette méthode ne peut en aucun cas s'appliquer à des pièces de géométrie complexe, une étape de déformation de l'ensemble constitué par les tôles soudées entre elles étant alors nécessaire.

### EXPOSÉ DE L'INVENTION

L'invention a donc pour but de présenter un procédé de fabrication de pièces comprenant au moins une cavité interne et utilisant notamment les techniques de soudage par diffusion et de formage superplastique, ce procédé remédiant, entre autres, aux inconvénients cités ci-dessus.

Le but de la présente invention est donc de proposer un procédé simplifiant considérablement la mise en oeuvre des différentes étapes, afin de réduire notamment le temps de cycle de réalisation des pièces, ainsi que la quantité d'éléments constituant l'outillage.

L'invention a également pour but de fournir un moule destiné à la fabrication de pièces comprenant au moins une cavité interne, ce moule étant en outre utilisable pour la mise en oeuvre d'un procédé répondant au but mentionné ci-dessus.

Pour ce faire, l'invention a tout d'abord pour objet un procédé de fabrication de pièces comprenant au moins une cavité interne, ce procédé comprenant successivement une étape de soudage par diffusion d'au moins deux tôles métalliques, une étape de déformation d'un ensemble formé par lesdites tôles métalliques soudées entre elles, ainsi qu'une étape de gonflage de chacune des cavités internes par formage superplastique. Le procédé selon l'invention est réalisé en utilisant un moule permettant, lors d'une unique opération de mise en chauffe de ce moule, de réaliser successivement l'étape de soudage par diffusion et l'étape de déformation sur au moins une première pièce se situant dans une partie évidée primaire du moule, ainsi que de réaliser l'étape de gonflage par formage superplastique sur au moins une seconde pièce se situant dans une partie évidée secondaire du moule.

Avantageusement, le procédé selon l'invention entraîne une réduction du temps de cycle de fabrication des pièces, et ce par rapport aux temps qui étaient nécessaires pour réaliser un cycle entier de fabrication lors de la mise en oeuvre des procédés de l'art antérieur.

De plus, une seule opération de mise en chauffe du moule permet de réaliser les trois étapes du procédé, dont les deux premières sur au moins une première pièce et la troisième sur au moins une seconde pièce. Ainsi, les coûts de fabrication des pièces sont diminués en raison de la réduction considérable du nombre d'enfournements à effectuer.

Dans le procédé selon l'invention, un avantage réside dans la possibilité de traiter au moins deux pièces simultanément lors d'une seule opération de mise en chauffe du moule utilisé. En effet, une première pièce est soumise successivement à l'étape de soudage par diffusion puis à l'étape de déformation, et une seconde pièce subit la dernière étape de gonflage par formage superplastique.

En effectuant une telle mise en oeuvre du procédé, le nombre d'éléments nécessaires pour constituer l'outillage est fortement diminué. Un seul moule adapté et comprenant plusieurs parties évidées est alors requis pour effectuer l'ensemble des étapes du procédé selon l'invention.

De préférence, pour chaque première pièce, l'étape de soudage par diffusion est réalisée en effectuant à l'intérieur de la partie évidée primaire du moule, une première injection de gaz sous pression plaquant les tôles métalliques contre une première surface plane de la partie évidée primaire du moule. De plus, toujours pour chaque première pièce, l'étape de déformation de l'ensemble formé par lesdites tôles métalliques soudées entre elles est réalisée en purgeant le gaz sous pression introduit dans la partie évidée primaire lors de la première injection de gaz, puis en effectuant une seconde injection de gaz sous pression plaquant les tôles métalliques soudées entre elles contre une seconde surface de la partie évidée primaire du moule.

De manière avantageuse, le procédé utilise un moule comprenant une partie évidée primaire ayant des surfaces adaptées pour effectuer les deux premières étapes du procédé. Ainsi, une seule partie évidée permet avantageusement de présenter deux surfaces sur lesquelles vont être plaquées les tôles métalliques, afin de réaliser deux opérations différentes.

De façon préférentielle, pour chaque seconde pièce, l'étape de gonflage de chacune des cavités internes par formage superplastique est réalisée en effectuant une troisième injection de gaz sous pression dans chacune des cavités, le gonflage étant réalisé de sorte qu'un ensemble déformé d'au moins deux tôles soudées entre elles épouse une paroi interne de la partie évidée secondaire du moule.

L'unique opération de mise en chauffe du moule s'effectue avantageusement à une température uniforme sur l'ensemble du moule, cette température avoisinant de préférence environ 920°C.

L'invention a également pour objet un moule destiné à la fabrication de pièces comprenant au moins une cavité interne. Ce moule comprend au moins une partie évidée primaire ainsi qu'au moins une partie évidée secondaire, chaque partie évidée primaire comprenant une première surface ainsi qu'une seconde surface, la première surface étant plane afin de permettre un soudage par diffusion d'au moins deux tôles métalliques lorsque celles-ci sont plaquées contre cette première surface, la seconde surface permettant une déformation de l'ensemble formé par les tôles métalliques soudées entre elles lorsque cet ensemble est plaqué contre cette seconde surface. De plus, chaque partie évidée secondaire du moule est apte à recevoir un ensemble déformé de tôles métalliques soudées entre elles et subissant un gonflage par formage superplastique, ladite partie évidée secondaire comprenant une paroi interne de géométrie sensiblement. identique à une géométrie externe finale d'une pièce à réaliser.

Préférentiellement, le moule comporte en outre un bloc comprenant une des première et seconde surfaces d'une partie évidée primaire. Ce bloc comprend également en partie une paroi interne d'une partie évidée secondaire.

Avantageusement, la mise en équipression de deux parties évidées séparées par un bloc unique tel que celui décrit ci-dessus, permet entre autre de réduire les contraintes de flexion sur ce bloc. Un allègement du moule et en particulier de ce bloc est alors envisageable, entraînant ainsi l'utilisation de matériaux moins résistants et par conséquent moins onéreux.

D'autres avantages et caractéristiques de l'invention apparaîtront dans la description, non limitative, ci-dessous.

### BRÈVE DESCRIPTION DES DESSINS

Cette description sera faite au regard des dessins annexés parmi lesquels :

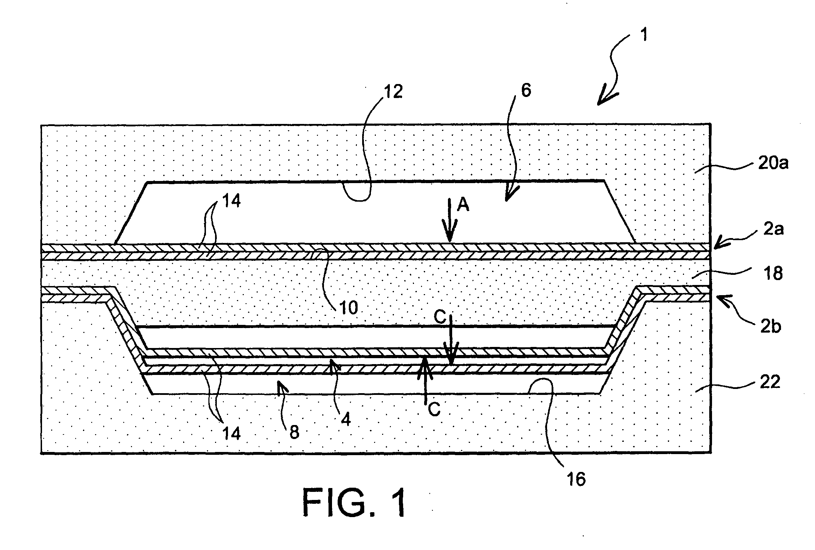

- la figure 1 représente une vue schématique d'un moule selon un mode préféré de réalisation de l'invention, lorsque ce moule reçoit d'une part des tôles métalliques subissant un soudage par diffusion, et d'autre part un ensemble déformé de tôles métalliques soudées entre elles subissant un gonflage par formage superplastique.

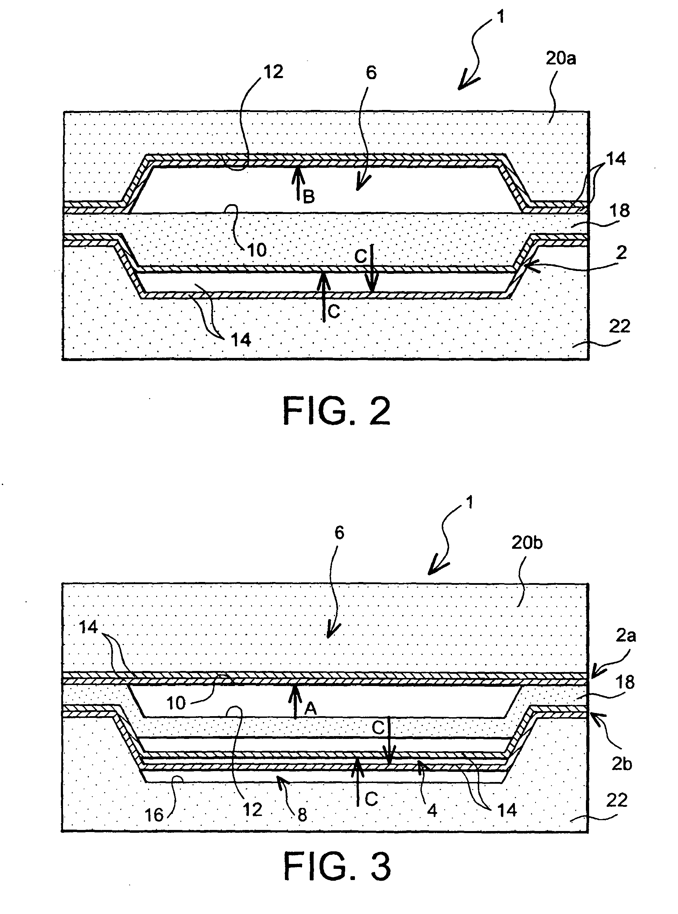

- la figure 2 représente une vue schématique d'un moule utilisé pour mettre en oeuvre un procédé selon un mode préféré de réalisation de l'invention, lorsque l'opération de mise en chauffe de ce moule est achevée.
- la figure 3 représente une vue schématique d'un moule selon un autre mode préféré de réalisation de l'invention, lorsque ce moule reçoit d'une part des tôles métalliques subissant un soudage par diffusion, et d'autre part un ensemble déformé de tôles métalliques soudées entre elles subissant un gonflage par formage superplastique.

### EXPOSÉ DÉTAILLÉ DE MODES DE RÉALISATION PRÉFÉRÉS

En référence aux figures 1 et 2, on voit un moule 1 destiné à la fabrication de pièces 2 comprenant au moins une cavité interne 4, et de préférence une seule.

Pour obtenir de telles pièces creuses 2, le moule 1 selon l'invention fait appel aux techniques connues de soudage par diffusion et de formage superplastique. En effet, le moule 1 permet la mise en oeuvre d'un procédé de fabrication de pièces visant à réaliser une étape de soudage par diffusion d'au moins deux tôles métalliques 14, une étape de déformation d'un ensemble formé par au moins deux tôles métalliques 14 soudées entre elles, et enfin une étape de gonflage par formage superplastique d'au moins une cavité interne 4 d'un ensemble déformé comprenant au moins deux tôles métalliques 14 soudées entre elles.

Le moule 1 comprend au moins une partie évidée primaire 6 et au moins une partie évidée secondaire 8. De préférence, comme on peut le voir sur les figures 1 et 2, le moule 1 comprend une seule partie évidée primaire 6 et une seule partie évidée secondaire 8.

En ce qui concerne la partie évidée primaire 6, cette dernière dispose de deux surfaces 10,12 situées en regard l'une de l'autre. On note parmi ces surfaces une première surface 10 qui est plane, la planéité de cette première surface 10 étant nécessaire pour réaliser un soudage par diffusion de tôles métalliques 14, positionnées à plat et en appui sur cette première surface 10. Les tôles métalliques 14 sont préférablement au nombre de deux.

La partie évidée primaire 6 comprend également une seconde surface 12. Cette seconde surface 12 peut comprendre des portions convexes et/ou des portions concaves, le but étant que cette seconde surface 12 dispose d'une géométrie sensiblement similaire à une géométrie que l'on souhaite appliquer par déformation à un ensemble comprenant des tôles métalliques 14 soudées entre elles, avant de soumettre cet ensemble à une opération de gonflage par formage superplastique.

La partie évidée secondaire 8, est, quant à elle, apte à recevoir un ensemble déformé de tôles métalliques 14 soudées entre elles. Cette partie évidée secondaire 8 comprend une paroi interne 16 de géométrie sensiblement identique à une géométrie externe finale d'une pièce 2 à réaliser. Ainsi, lors d'une opération de gonflage par formage superplastique d'un ensemble déformé de tôles métalliques 14 soudées entre elles, cet ensemble se déforme jusqu'à épouser la paroi interne 16 de la partie évidée secondaire 8, afin d'adopter une forme externe finale correspondant à la forme d'une pièce 2 que l'on désire réaliser.

Le moule 1 est également en coopération avec différents éléments qui permettent d'effectuer les diverses opérations mentionnées ci-dessus.

Tout d'abord, le moule est soumis à une opération de mise en chauffe dont la température appliquée est d'environ 920°C. Cette température peut bien entendu être modifiée par l'homme du métier, selon son appréciation des critères comme le volume du moule 1 ou encore la composition exacte des matériaux constituant les tôles métalliques 14.

De plus, durant une phase de fabrication de pièces 2, le moule 1 est également relié à divers moyens d'injection de gaz sous pression (non représentés).

C'est ainsi que le moule 1 est susceptible de subir une première injection de gaz sous pression à l'intérieur de sa partie évidée primaire 6, afin de plaquer les tôles métalliques 14, positionnées les unes sur les autres, contre la première surface 10 plane de la partie évidée primaire 6 (comme le montre la flèche A sur la figure 1). Sous l'effet de la mise en chauffe et de l'injection de gaz sous pression appliquée, un soudage par diffusion des tôles métalliques 14 est alors réalisé. On obtient ainsi un ensemble d'une seule pièce comprenant une pluralité de tôles métalliques 14 soudées entre elles.

En référence à la figure 2, on voit que le moule 1 est à nouveau susceptible de subir une injection de gaz sous pression, et ce toujours à l'intérieur de cette partie évidée primaire 6. Préalablement à cette injection, le gaz résultant de la première injection de gaz sous pression est purgé pour laisser place au gaz provenant d'une seconde injection de gaz sous pression. Cette action a pour conséquence de plaquer et de déformer l'ensemble formé par les tôles métalliques 14 soudées entre elles, pour donner à cet ensemble une forme sensiblement identique à une forme de la seconde surface 12. La flèche B de la figure 2 symbolise le plaquage des tôles métalliques 14 contre la seconde surface 12.

Dans le partie évidée secondaire 8, une troisième injection de gaz peut être réalisée pour effectuer, à l'aide de la chaleur appliquée, un gonflage par formage superplastique. Le gonflage par formage superplastique permet alors de développer la cavité interne 4 à l'intérieur de la partie évidée secondaire 8. Grâce à cette troisième injection, l'ensemble déformé de tôles métalliques 14 soudées entre elles, adopte une géométrie externe correspondant sensiblement à la géométrie de la paroi interne 16 de la partie évidée secondaire 8. Les tôles métalliques 14 peuvent alors épouser la paroi interne 16 de la partie évidée secondaire 8, et donner à l'ensemble une forme externe correspondant à la forme externe d'une pièce 2 que l'on désire réaliser. Les flèches C visibles sur les figures 1 et 2 symbolisent le plaquage des tôles métalliques 14 sur la paroi interne 16 de la partie évidée secondaire 8.

On peut aussi noter que pour effectuer les différentes injections de gaz sous pression, il est possible d'utiliser un gaz inerte, de préférence un gaz du type argon.

Toujours en référence aux figures 1 et 2, selon un mode préféré de réalisation de l'invention, le moule 1 comprend un bloc 18 séparant les parties évidées primaire 6 et secondaire 8.

En effet, ce bloc 18 comprend une des première 10 et seconde surfaces 12 de la partie évidée primaire 6, et comprend également partiellement la paroi interne 16 de la partie évidée secondaire 8. En d'autres termes, ce bloc 18, faisant partie intégrante du moule 1, dispose de deux surfaces dont chacune est utilisée pour constituer au moins partiellement les parties évidées primaire 6 et secondaire 8.

De préférence, le moule 1 comprend un bloc supérieur 20a, un bloc intermédiaire 18 ainsi qu'un bloc inférieur 22. Ces trois blocs sont superposés les uns sur les autres, définissant ainsi la partie évidée primaire 6 ainsi que la partie évidée secondaire 8. Cette configuration du moule 1 est particulièrement intéressante en raison de la simplicité de la conception, mais également en raison de la simplicité qu'elle offre lors de la manipulation de ce moule 1. De plus, lorsque les trois blocs 18,20a,22 du moule 1 sont solidarisés les uns avec les autres, en vue de subir une opération de mise en chauffe, les différentes injections de gaz sous pression effectuées mettent les parties évidées primaire et secondaire 6,8 en équipression, ce qui permet grandement de réduire les contraintes de flexion sur le bloc intermédiaire 18. La conséquence directe d'un tel équilibrage de part et d'autre du bloc intermédiaire 18 est donc la possibilité d'alléger ce dernier, provoquant par conséquent une réduction des coûts du moule 1.

En référence aux figures 2 et 3, on voit que la partie évidée primaire 6 se situe au-dessus de la partie évidée secondaire 8, ces positions relatives de l'une par rapport à l'autre pouvant par exemple être celles adoptées lorsque le moule 1 subit une opération d'enfournement.

Dans ce cas, on peut alternativement prévoir que la première surface 10 plane se situe sur le bloc intermédiaire 18 (figure 2), ou que cette première surface 10 plane se situe sur le bloc supérieur 20b (figure 3). Ces deux possibilités correspondent donc à deux différents modes de réalisation préférés du moule selon l'invention.

L'invention concerne également un procédé de fabrication de pièces 2 comprenant au moins une cavité interne 4. Comme il l'a été rappelé ci-dessus, le procédé doit opérer trois étapes distinctes pour aboutir à une pièce 2 finale. Parmi ces étapes, on compte une étape de soudage par diffusion d'au moins deux tôles métalliques 14, une étape de déformation d'un ensemble comprenant au moins deux tôles métalliques 14 soudées entre elles, et enfin une étape de gonflage par formage superplastique d'au moins une cavité interne 4 d'un ensemble déformé d'au moins deux tôles métalliques 14 soudées entre elles.

Pour mettre en oeuvre ce procédé, on utilise un moule 1 en lui faisant subir une opération unique de mise en chauffe, de préférence à une température d'environ 920°C.

Durant cette opération unique de mise en chauffe du moule 1, le procédé selon l'invention est capable de traiter plusieurs pièces 2a,2b en même temps, en leur faisant subir des étapes différentes selon la partie évidée du moule 1 dans laquelle elles se trouvent.

De préférence, le procédé traite simultanément deux pièces 2a,2b.

On note alors une première pièce 2a ainsi qu'une seconde pièce 2b, la première pièce 2a subissant les opérations successives de soudage par diffusion et de déformation dans une partie évidée primaire 6, alors que la seconde pièce 2b subit durant le même enfournement, une opération de gonflage par formage superplastique dans une partie évidée secondaire 8.

Il y a donc trois opérations effectuées durant la même mise en chauffe d'un seul moule 1, alors que les procédés de l'art antérieur proposaient trois étapes de mise en chauffe distinctes et successives, en utilisant de surcroît trois moules différents.

Comme on peut le voir sur la figure 2, à la fin de chaque cycle de fabrication de pièces, c'est à dire lorsque l'unique opération de mise en chauffe du moule 1 est achevée, on dispose d'une pièce 2 de géométrie sensiblement identique à la géométrie d'une pièce finale à réaliser, cette pièce 2 se situant dans la partie évidée secondaire 8.

De plus, on dispose également d'un ensemble déformé de tôles métalliques 14 soudées entre elles se situant dans la partie évidée primaire 6, cet ensemble étant destiné, lors d'un cycle suivant de mise en chauffe du moule 1, à être positionné dans la partie évidée secondaire 8, afin de subir un gonflage de sa cavité interne 4 par formage superplastique.

Ce procédé est particulièrement intéressant dans le cadre de la réalisation de pièces creuses utilisées dans l'industrie aéronautique.

Bien entendu, diverses modifications peuvent être apportées par l'homme de l'art au procédé et au moule qui viennent d'être décrits, uniquement à titre d'exemples non limitatifs.

## Revendications

1. Procédé de fabrication de pièces (2) comprenant au moins une cavité interne (4), ledit procédé comprenant successivement une étape de soudage par diffusion d'au moins deux tôles métalliques (14), une étape de déformation d'un ensemble formé par lesdites tôles métalliques (14) soudées entre elles, ainsi qu'une étape de gonflage de chacune des cavités internes (4) par formage superplastique, **caractérisé en ce que** le procédé est réalisé en utilisant un moule (1) permettant, lors d'une unique opération de mise en chauffe de ce moule (1), de réaliser successivement l'étape de soudage par diffusion et l'étape de déformation sur au moins une première pièce (2a) se situant dans une partie évidée primaire (6) du moule (1), ainsi que de réaliser l'étape de gonflage par formage superplastique sur au moins une seconde pièce (2b) se situant dans une partie évidée secondaire (8) du moule (1).

2. Procédé de fabrication selon la revendication 1, **caractérisé en ce que** pour chaque première pièce (2a), l'étape de soudage par diffusion est réalisée en effectuant à l'intérieur de la partie évidée primaire (6) du moule (1), une première injection de gaz sous pression plaquant lesdites tôles métalliques (14) contre une première surface (10) plane de la partie évidée primaire (6) du moule (1).

3. Procédé de fabrication selon la revendication 2, **caractérisé en ce que** pour chaque première pièce (2a), l'étape de déformation de l'ensemble formé par lesdites tôles métalliques (14) soudées entre elles est réalisée en purgeant ledit gaz sous pression introduit dans la partie évidée primaire (6) lors de ladite première injection de gaz, puis en effectuant une seconde injection de gaz sous pression plaquant lesdites tôles métalliques (14) soudées entre elles contre une seconde surface (12) de la partie évidée primaire (6) du moule (1).

4. Procédé de fabrication selon l'une quelconque des revendications précédentes, **caractérisé en ce que** pour chaque seconde pièce (2b), l'étape de gonflage de chacune des cavités internes (4) par formage superplastique est réalisée en effectuant une troisième injection de gaz sous pression dans chacune des cavités internes (4), le gonflage étant réalisé de sorte qu'un ensemble déformé d'au moins deux tôles métalliques (14) soudées entre elles épouse une paroi interne (16) de la partie évidée secondaire (8) du moule (1).

5. Procédé de fabrication selon l'une quelconque des revendications précédentes, **caractérisé en ce que** l'unique opération de mise en chauffe du moule (1) s'effectue à une température d'environ 920°C.

6. Moule (1) destiné à la fabrication de pièces (2a,2b) comprenant au moins une cavité interne (4), **caractérisé en ce qu'**il comprend au moins une partie évidée primaire (6) ainsi qu'au moins une partie
évidée secondaire (8), chaque partie évidée primaire (6) comprenant une première surface (10) ainsi qu'une seconde surface (12), ladite première surface (10) étant plane afin de permettre un soudage par diffusion d'au moins deux tôles métalliques (14) lorsque celles-ci sont plaquées contre cette première surface (10), ladite seconde surface (12) permettant une déformation de l'ensemble formé par lesdites tôles métalliques (14) soudées entre elles lorsque ledit ensemble est plaqué contre cette seconde surface (12), chaque partie évidée secondaire (8) du moule (1) étant apte à recevoir un ensemble déformé de tôles métalliques (14) soudées entre elles et subissant un gonflage par formage superplastique, ladite partie évidée secondaire (8) comprenant une paroi interne (16) de géométrie sensiblement identique à une géométrie externe finale d'une pièce (2) à réaliser.

7. Moule (1) selon la revendication 6, **caractérisé en ce qu'**il comprend au moins un bloc (18) comprenant une desdites première (10) et seconde surfaces (12) d'une partie évidée primaire (6), et **en ce que** ce bloc (18) comprend également partiellement une paroi interne (16) d'une partie évidée secondaire (8).

8. Moule (1) selon la revendication 6 ou la revendication 7, **caractérisé en ce qu'**il comprend une partie évidée primaire (6) ainsi qu'une partie évidée secondaire (8), lesdites première (6) et seconde parties évidées (8) étant définies par un bloc supérieur (20a,20b), un bloc intermédiaire (18) et un bloc inférieur (22), ces blocs (18,20a,20b,22) étant arrangés les uns sur les autres.

9. Moule (1) selon la revendication 8, **caractérisé en ce que** la partie évidée primaire (6) se situe au-dessus de la partie évidée secondaire (8).

10. Moule (1) selon la revendication 9, **caractérisé en ce que** ladite première surface (10) de la partie évidée primaire (6) se situe sur ledit bloc supérieur (20b).

11. Moule (1) selon la revendication 9, **caractérisé en ce que** ladite première surface (10) de la partie évidée primaire (6) se situe sur ledit bloc intermédiaire (18).

## Claims

1. Method of manufacturing parts (2) comprising at least one internal cavity (4), said method comprising successively diffusion welding of at least two metal sheets (14), a step of deforming an assembly formed by said metal sheets (14) welded together, and a step of inflating each of the internal cavities (4) by superplastic forming, **characterised in that** the method is implemented using a mould (1) making it possible, during a single operation of heating this mould (1), to perform successively the diffusion welding step and the deformation step on at least a first part (2a) situated in a primary hollowed-out part (6) of the mould (1), and to perform the step of inflation by superplastic forming on at least a second part (2b) situated in a secondary hollowed-out part (8) of the mould (1).

2. Manufacturing method according to claim 1, **characterised in that**, for each first part (2a), the diffusion welding step is performed by making, within the primary hollowed-out part (6) of the mould (1), a first injection of pressurised gas pressing said metal sheets (14) against a first flat surface (10) of the primary hollowed-out part (6) of the mould (1).

3. Manufacturing method according to claim 2, **characterised in that**, for each first part (2a), the step of deformation of the assembly formed by said metal sheets (14) welded together is performed by purging said pressurised gas introduced into the primary hollowed-out part (6) during said first injection of gas, and then making a second injection of pressurised gas pressing said metal sheets (14) welded together against a second surface (12) of the primary hollowed-out part (6) of the mould (1).

4. Manufacturing method according to any one of the preceding claims, **characterised in that**, for each second part (2b), the step of inflating each of the internal cavities (4) by superplastic forming is performed by making a third injection of pressurised gas in each of the internal cavities (4), the inflation being performed so that a deformed assembly of at least two metal sheets (14) welded together adopts the shape of an internal wall (16) of the secondary hollowed-out part (8) of the mould (1).

5. Manufacturing method according to any one of the preceding claims, **characterised in that** the single operation of heating the mould (1) is performed at a temperature of approximately 920°C.

6. Mould (1) intended for manufacturing parts (2a, 2b) comprising at least one internal cavity (4), **characterised in that** it comprises at least one primary hollowed-out part (6) and at least a secondary hollowed-out part (8), each primary hollowed-out part (6) comprising a first surface (10) and a second surface (12), said first surface (10) being flat to allow diffusion welding of at least two metal sheets (14) when the latter are pressed against this first surface (10), said second surface (12) allowing a deformation of the assembly formed by said metal sheets (14) welded together when said assembly is pressed against this second surface (12), each secondary hollowed-out part (8) of the mould (1) being able to receive a deformed assembly of metal sheets (14) welded together and undergoing inflation by superplastic forming, said secondary hollowed-out part (8) comprising an internal wall (16) with a geometry substantially identical to a final external geometry of a part (2) to be produced.

7. Mould (1) according to claim 6, **characterised in that** it comprises at least one block (18) comprising one of said first (10) and second (12) surfaces of a primary hollowed-out part (6), and **in that** this block (18) also partially comprises an internal wall (16) of a secondary hollowed-out part (8).

8. Mould (1) according to claim 6 or claim 7, **characterised in that** it comprises a primary hollowed-out part (6) and a secondary hollowed-out part (8), said first (6) and second (8) hollowed-out parts being defined by a top block (20a, 20b) an intermediate block (18) and a bottom block (22), these blocks (18, 20a, 20b, 22) being arranged on top of one another.

9. Mould (1) according to claim 8, **characterised in that** the primary hollowed-out part (6) is situated above the secondary hollowed-out part (8).

10. Mould (1) according to claim 9, **characterised in that** said first surface (10) of the primary hollowed-out part (6) is situated on said top block (20b).

11. Mould (1) according to claim 9, **characterised in that** said first surface (10) of the primary hollowed-out part (6) is situated on said intermediate block (18).

## Patentansprüche

1. Verfahren zu Herstellung von Teilen (2), umfassend mindestens einen internen Hohlraum (4), wobei das Verfahren aufeinander folgend einen Schritt des Diffusionsschweißens von mindestens zwei Metallblechen (14), einen Schritt des Verformens einer Einheit, gebildet aus den untereinander geschweißten Metallblechen (14) ebenso wie einen Schritt des Aufpumpens jedes der internen Hohlräume (4) durch superplastische Umformung umfasst, **dadurch gekennzeichnet, dass** das Verfahren unter Verwendung einer Form (1) durchgeführt wird, die es bei einem einzigen Vorgang des Erhitzens dieser Form (1) ermöglicht, aufeinander folgend den Schritt des Diffusionsschweißens und den Schritt des Verformens auf mindestens einem ersten Teil (2a) durchzuführen, der sich in einem primären ausgesparten Teil (6) der Form (1) befindet, sowie den Schritt des Aufpumpens durch superplastische Umformung auf mindestens einem zweiten Teil (2b) durchzuführen, der sich in einem sekundären ausgesparten Teil (8) der Form (1) befindet.

2. Verfahren zur Herstellung nach Anspruch 1, **dadurch gekennzeichnet, dass** für jeden ersten Teil (2a) der Schritt des Diffusionsschweißens durchgeführt wird, indem im Inneren des primären ausgesparten Teils (6) der Form (1) eine erste Injektion von Gas unter Druck erfolgt, die die Metallbleche (14) gegen eine erste ebene Fläche (10) des primären ausgesparten Teils (6) der Form (1) plattiert.

3. Verfahren zur Herstellung nach Anspruch 2, **dadurch gekennzeichnet, dass** für jeden ersten Teil (2a) der Schritt der Verformung der Einheit, gebildet aus den untereinander geschweißten Metallblechen (14) durchgeführt wird, indem das Gas unter Druck, das in den primären ausgesparten Teil (6) bei der ersten Injektion von Gas eingeführt wurde, abgelassen wird, dann indem eine zweite Injektion von Gas unter Druck erfolgt, die die untereinander geschweißten Metallbleche (14) gegen eine zweite Fläche (12) des primären ausgesparten Teils (6) der Form (1) plattiert.

4. Verfahren zur Herstellung nach einem der vorhergehenden Ansprüche, **dadurch gekennzeichnet, dass** bei jeden zweiten Teil (2b) der Schritt des Aufpumpens jedes der internen Hohlräume (4) durch superplastische Umformung durchgeführt wird, indem eine dritte Injektion von Gas unter Druck in jeden der internen Hohlräume (4) erfolgt, wobei das Aufpumpen so durchgeführt wird, dass eine vorformte Einheit von mindestens zwei untereinander geschweißten Metallblechen (14) eine interne Wand (16) des sekundären ausgesparten Teils (8) der Form (1) umgibt.

5. Verfahren zur Herstellung nach einem der vorhergehenden Ansprüche, **dadurch gekennzeichnet, dass** der einzige Vorgang des Erhitzens der Form (1) bei einer Temperatur von ungefähr 920 °C erfolgt.

6. Form (1), vorgesehen für die Herstellung von Teilen (2a, 2b), umfassend mindestens einen internen Hohlraum (4), **dadurch gekennzeichnet dass** sie mindestens einen primären ausgesparten Teil (6) umfasst, sowie mindestens einen sekundären ausgesparten Teil (8), wobei jeder primäre ausgesparte Teil (6) eine erste Fläche (10) umfasst, ebenso wie eine zweite Fläche (12), wobei die erste Fläche (10) eben ist, um eine Diffusionsschweißung von mindestens zwei Metallblechen (14) zu ermöglichen, wenn diese gegen diese erste Fläche (10) plattiert werden, wobei die zweite Fläche (12) eine Verformung der Einheit, gebildet aus den untereinander geschweißten Metallblechen (14) ermöglicht, wenn die Einheit gegen diese zweite Fläche (12) plattiert wird, wobei jeder sekundäre ausgesparte Teil (8) der Form (1) dazu geeignet ist, eine verformte Einheit von untereinander geschweißten Metallblechen (14) aufzunehmen und einem Aufpumpen durch superplastische Umformung unterzogen wird, wobei der sekundäre ausgesparte Teil (8) eine interne Wand (16) mit einer Geometrie umfasst, die im Wesentlichen identisch mit einer endgültigen externen Geometrie eines durchzuführenden Teils (2) ist.

7. Form (1) nach Anspruch 6, **dadurch gekennzeichnet, dass** sie mindestens einen Block (18) umfasst, umfassend entweder die erste (10) oder die zweite (12) Fläche eines primären ausgehöhlten Teils (6), und dadurch, dass dieser Block (18) auch teilweise ein interne Wand (16) eines sekundären ausgesparten Teils (8) umfasst.

8. Form (1) nach Anspruch 6 oder Anspruch 7, **dadurch gekennzeichnet, dass** sie einen primären ausgesparten Teil (6) sowie einen sekundären ausgesparten Teil (8) umfasst, wobei der primäre (6) und der sekundäre ausgesparte Teil (8) durch einen oberen Block (20a, 20b), einen dazwischen liegenden Block (18) und einen unteren Block (22) definiert sind, wobei diese Blöcke (18, 20a, 20b, 22) aufeinander angeordnet sind.

9. Form (1) nach Anspruch 8, **dadurch gekennzeichnet, dass** der primäre ausgesparte Teil (6) über dem sekundären ausgesparten Teil (8) angeordnet ist.

10. Form (1) nach Anspruch 9, **dadurch gekennzeichnet, dass** die erste Fläche (10) des primären ausgesparten Teils (6) auf dem oberen Block (20b) angeordnet ist.

11. Form (1 ) nach Anspruch 9, **dadurch gekennzeichnet, dass** die erste Fläche (10) des primären ausgesparten Teils (6) auf dem dazwischen liegenden Block (18) angeordnet ist.
